# EUROPEAN PATENT SPECIFICATION

(11) **EP 3 511 932 B1**
(45) Date of publication and mention of the grant of the patent: **27.05.2020**
(21) Application number: 19150249.1
(22) Date of filing: 03.01.2019
(51) Int. Cl.: G10L 15/22, B60R 16/037, G05D 1/00, G10L 17/00

(54) **INFORMATION PROCESSING DEVICE, METHOD, AND PROGRAM**
INFORMATIONSVERARBEITUNGSVORRICHTUNG, -VERFAHREN UND -PROGRAMM
DISPOSITIF, PROCÉDÉ ET PROGRAMME DE TRAITEMENT D'INFORMATIONS

(30) Priority: 11.01.2018 JP 2018002759
(43) Date of publication of application: 17.07.2019
(73) Proprietor: TOYOTA JIDOSHA KABUSHIKI KAISHA, Toyota-shi, Aichi 471 8571 (JP)
(72) Inventor: KOBAYASHI, Hideki, Toyota-shi,, Aichi 471-8571, (JP); MUGURUMA, Akihiro, Toyota-shi,, Aichi 471-8571, (JP); SUGIYAMA, Yukiya, Toyota-shi,, Aichi 471-8571, (JP); HIGASHIHARA, Shota, Toyota-shi,, Aichi 471-8571, (JP); MATSUO, Riho, Toyota-shi,, Aichi 471-8571, (JP); YAMAMURO, Naoki, Toyota-shi,, Aichi 471-8571, (JP)
(74) Representative: J A Kemp LLP

(56) References cited:
- WO-A2-2017/151672
- US-A1- 2014 074 318
- US-A1- 2014 365 228
- US-A1- 2017 221 480

## Description

### BACKGROUND

### Technical Field

The present disclosure relates to an information processing device, an information processing method, and a program.

### Related Art

US 2014/0365228 A describes various exemplary embodiments relate to a command interpreter for use in a vehicle control system in a vehicle for interpreting user commands, a vehicle interaction system including such a command interpreter, a vehicle including such a vehicle interaction system, and related method and non-transitory machine-readable storage medium, including: a memory and a processor, the processor being configured to: receive, from at least one human via a first input device, a first input having a first type; receive a second input having a second type via a second input device, wherein the second type comprises at least one of sensed information describing a surrounding environment of the vehicle and input received from at least one human; interpret both the first input and the second input to generate a system instruction; and transmit the system instruction to a different system of the vehicle.

Conventionally, devices each of which controls by voice respective devices mounted in a vehicle have been known. For example, see U.S. Patent No. 9580028.

However, a technology disclosed in U.S. Patent No. 9580028 does not take into consideration a case in which driving operation of a vehicle is performed by voice. For example, in a case in which a dialogue device that has a dialogue with passengers who are on board a vehicle is installed in the vehicle and driving operation of the vehicle is performed according to an utterance, the driving operation is required to be performed only according to utterances from the driver.

However, since the technology disclosed in U.S. Patent No. 9580028 sometimes causes a case in which driving operation is performed based on an utterance emitted by a passenger who is not the driver, the technology is not appropriate.

### SUMMARY

The present disclosure provides an information processing device, an information processing method, and a program that are capable of performing driving operation of a vehicle appropriately even if plural passengers are on board the vehicle, in a case in which the driving operation of the vehicle is performed according to an utterance of a driver.

An information processing device according to a first aspect of the present invention is defined in appended claim 1.

The information processing device of the first aspect recognizes a passenger who emitted an utterance according to the acquired utterance. The information processing device controls driving operation of the vehicle indicated by the utterance from the passenger, based on a recognition result of the passenger and setting information. For example, in a case in which an utterance emitted by the driver has a content instructing driving operation of the vehicle, the driving operation is permitted. In a case in which an utterance emitted by a passenger who is not the driver has a content instructing driving operation of the vehicle, the driving operation is restricted. This configuration enables driving operation of the vehicle to be performed appropriately even in a case in which plural passengers are on board the vehicle when driving operation of the vehicle is performed according to an utterance emitted by the driver. The setting information is information with respect to each of the plurality of passengers and information about whether or not each passenger is a passenger who is permitted to perform driving operation of the vehicle. Since use of the setting information enables whether or not a passenger who emitted an utterance is a driver who is permitted to perform driving operation of the vehicle to be identified, it is possible to perform the driving operation of the vehicle according to an utterance emitted by the driver even in a case in which plural passengers are on board the vehicle. In the information processing device, in a case in which, even when a passenger who emitted an utterance is a passenger who is not permitted to perform driving operation of the vehicle, the passenger is permitted to perform vehicle operation different from the driving operation of the vehicle and a content of the utterance is a content relating to the vehicle operation different from the driving operation of the vehicle, the vehicle operation is performed according to the content of the utterance. Thus, in a case in which a passenger is permitted to perform vehicle operation different from driving operation, it is possible to instruct the vehicle operation by the utterance.

An information processing device according to a second aspect of the present disclosure is configured such that, in the first aspect, the control unit, based on a recognition result of the passenger obtained by the recognition unit and the setting information, in a case in which the passenger who emitted the utterance acquired by the acquisition unit is a passenger who is not permitted to perform the driving operation of the vehicle and the content of the utterance is a content relating to the driving operation of the vehicle, outputs a control signal that indicates restricting the driving operation according to the content of the utterance from the passenger.

In the information processing device of the second aspect, driving operation of the vehicle is performed according to a content of an utterance emitted by a passenger and whether or not the passenger is permitted to perform the driving operation of the vehicle. This configuration enables driving operation in accordance with a content of an utterance emitted by the driver to be performed. This configuration also enables driving operation of the vehicle to be restricted even in a case in which an utterance having a content relating to the driving operation was emitted by a passenger who is not the driver.

An information processing device according to a third aspect of the present disclosure is configured such that, in the first or second aspect, the control unit sets the information processing device in a state in which the driving operation can be performed according to an utterance emitted by the passenger in a case in which a position of the information processing device is inside the vehicle.

The information processing device of the third aspect sets the information processing device in a state in which driving operation can be performed by an utterance in a case in which a position of the information processing device itself is inside the vehicle. This setting enables driving operation performed by an utterance emitted by the driver to be started smoothly.

An information processing device according to a fourth aspect of the present disclosure is configured such that, in the first to third aspects, the recognition unit recognizes whether or not the passenger who emitted the utterance is a driver and the control unit outputs a control signal that indicates performing the driving operation according to a content of the utterance emitted by the driver.

In the information processing device of the fourth aspect, it is possible to recognize a driver and perform driving operation according to an utterance emitted by the driver.

An information processing device according to a fifth aspect of the present disclosure is configured such that, in the first to fourth aspects, the information processing device is a dialogue device that performs a dialogue with the passengers.

Since the information processing device of the fifth aspect is a dialogue device, the information processing device may perform an operation different from vehicle operation for a vehicle. For example, it is possible to play music inside a vehicle according to a content of an instruction indicated by an utterance from a passenger.

A program according to a sixth aspect of the present invention is defined in appended claim 6.

An information processing method according to an seventh aspect of the present invention is defined in appended claim 7.

As described above, the present disclosure enables driving operation of a vehicle to be performed appropriately even in a case in which plural passengers are on board the vehicle when the driving operation of the vehicle is performed according to an utterance emitted by a driver.

### BRIEF DESCRIPTION OF THE DRAWINGS

Exemplary embodiments of the present disclosure will be described in detail based in the following figures, wherein:
Fig. 1 is a schematic block diagram of a dialogue device according to a first embodiment;
Fig. 2 is an explanatory diagram for a description of an outline of the first embodiment;
Fig. 3 is an explanatory diagram for a description of registration processing of voice information of a passenger;
Fig. 4 is a diagram illustrating an example of setting information;
Fig. 5 is a diagram illustrating an example of information of words having been registered in advance;
Fig. 6 is a diagram illustrating a configuration example of a computer in the dialogue device;
Fig. 7 is a flowchart illustrating an example of processing performed by the dialogue device according to the first embodiment;
Fig. 8 is a schematic block diagram of a dialogue device according to a second embodiment; and
Fig. 9 is an explanatory diagram for a description of an outline of the second embodiment.

### DETAILED DESCRIPTION

### <First Embodiment>

Hereinafter, a dialogue device 10 according to a first embodiment will be described referring to the drawings.

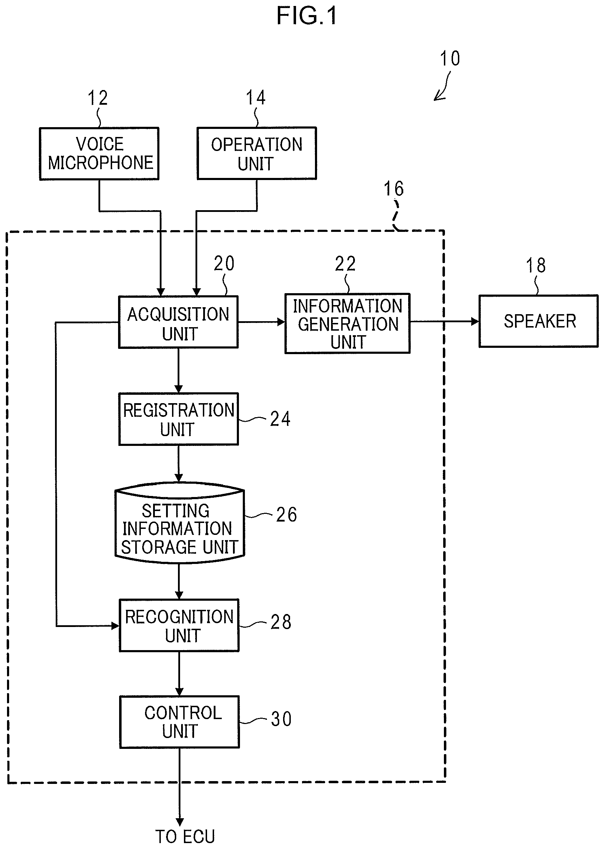

Fig. 1 is a block diagram illustrating an example of a configuration of the dialogue device 10 according to the first embodiment. As illustrated in Fig. 1, the dialogue device 10 includes a voice microphone 12, an operation unit 14, a computer 16, and a speaker 18. The dialogue device 10 is an example of an information processing device of the present disclosure.

The voice microphone 12 detects an utterance emitted by a user who is present in a vicinity of the dialogue device 10. The voice microphone 12 outputs the detected utterance from the user to the computer 16, which will be described later.

The operation unit 14 accepts operation information from an operator of the dialogue device 10. For example, a passenger in a vehicle who is an operator of the dialogue device 10 operates the operation unit 14 and inputs operation information to the dialogue device 10.

The computer 16 is configured including a central processing unit (CPU), a read only memory (ROM) storing a program and the like for achieving respective processing routines, a random access memory (RAM) storing data temporarily, a memory serving as a storage unit, a network interface, and the like. The computer 16 functionally includes an acquisition unit 20, an information generation unit 22, a registration unit 24, a setting information storage unit 26, a recognition unit 28, and a control unit 30.

The speaker 18 outputs voice information output by the computer 16.

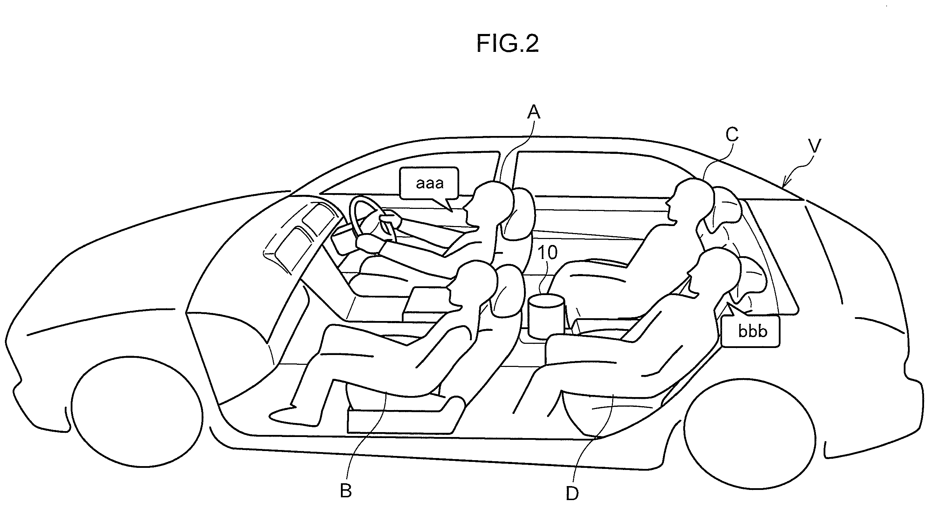

In Fig. 2, an explanatory diagram for a description of an outline of the embodiment is illustrated. As illustrated in Fig. 2, the dialogue device 10 according to the embodiment is brought in into a vehicle V by a passenger of the vehicle V. In a case in which a position of the dialogue device 10 itself is inside the vehicle V, the control unit 30 in the dialogue device 10 sets the dialogue device 10 in a mode (hereinafter, referred to as a driving mode) in which driving operation of the vehicle V can be performed according to an utterance emitted by a passenger. For example, the control unit 30 in the dialogue device 10 performs exchange of information via a predetermined server (illustration omitted) with an electronic control unit (ECU) (illustration omitted) that is mounted in the vehicle V. In a case in which the control unit 30 in the dialogue device 10 has detected that the dialogue device 10 is inside the vehicle V, the control unit 30 sets the dialogue device 10 in the driving mode.

The dialogue device 10 performs a dialogue with passengers A, B, C, and D in the vehicle V, based on contents of utterances emitted by the passengers. For example, in a case in which the dialogue device 10 is questioned, "What is the weather today?", by the passenger D, the dialogue device 10 acquires weather information from a predetermined database (illustration omitted) and responds, "The weather today is X". In a case in which the dialogue device 10 is instructed, "Play music", by the passenger C, the dialogue device 10 acquires a piece of music from a predetermined database (illustration omitted) and plays the acquired piece of music.

The dialogue device 10 according to the embodiment outputs a control signal relating to driving operation of the vehicle V according to an utterance by the passenger A who is a driver. For example, in a case in which the dialogue device 10 is instructed, "Switch to automatic driving", by the passenger A, who is a driver, illustrated in Fig. 2, the dialogue device 10 outputs a control signal for switching from manual driving to automatic driving.

However, in a case in which an utterance relating to driving operation is emitted by one of the passengers B, C, and D, who are different from the driver A, the driving operation instructed by the utterance is required to be restricted. For example, in a case in which an utterance "Switch to automatic driving", which relates to driving operation, is emitted by the passenger D illustrated in Fig. 2, the driving operation instructed by the utterance is required to be restricted.

Accordingly, in the embodiment, a passenger who emitted each utterance is recognized based on utterances from the passengers who are on board the vehicle. Based on a recognition result of each passenger, driving operation of the vehicle indicated by an utterance by the passenger is restricted. This configuration enables driving operation of the vehicle to be controlled only according to an utterance from the driver within the passengers who are on board the vehicle.

Specifically, the dialogue device 10 according to the embodiment registers voice information of utterances emitted by the driver and voice information of utterances emitted by passengers who are not the driver in advance. The dialogue device 10 determines whether or not an acquired utterance was emitted by the driver, based on the voice information of utterances emitted by the passengers and setting information that is information about whether or not each passenger is a passenger who is permitted to perform driving operation of the vehicle. In a case in which an acquired utterance is an utterance emitted by a passenger who is not the driver, the dialogue device 10 restricts driving operation of the vehicle. In a case in which an acquired utterance is an utterance emitted by the driver, the dialogue device 10 permits driving operation of the vehicle. Hereinafter, a specific description will be made.

The acquisition unit 20 successively acquires utterances from plural passengers on board the vehicle that are detected by the voice microphone 12.

The information generation unit 22 generates predetermined output information according to an utterance acquired by the acquisition unit 20. For example, in a case in which the acquisition unit 20 has acquired an utterance "Play music" from a passenger, the information generation unit 22 acquires a piece of music from a predetermined database (illustration omitted) and sets the acquired piece of music as output information. The information generation unit 22 outputs the output information to the speaker 18. The speaker 18 outputs a voice according to the output information.

The registration unit 24 registers setting information with respect to each of plural passengers according to operation information accepted by the operation unit 14. The setting information in the embodiment is information that was set in advance with respect to each of plural passengers and information about whether or not each passenger is a passenger who is permitted to perform driving operation of the vehicle. In the setting information, information about whether or not the passenger is a passenger who is permitted to perform vehicle operation that is different from the driving operation is also included. Specifically, the registration unit 24 registers voice information of each passenger and setting information indicating an operation(s) that the passenger is permitted to perform, based on an utterance from the passenger acquired by the acquisition unit 20.

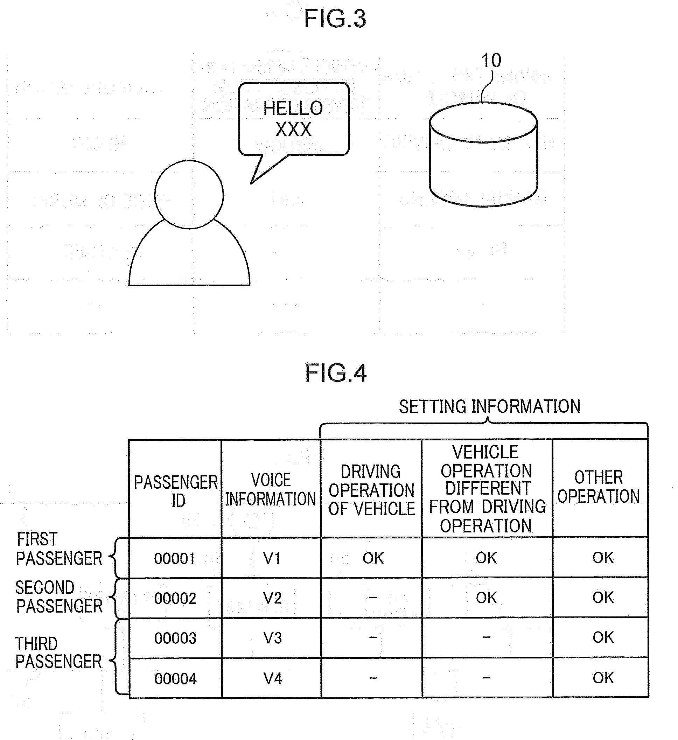

For example, a passenger who is on board the vehicle talks to the dialogue device 10 and registers voice information of his/her own, as illustrated in Fig. 3.

In this case, a predetermined passenger, by operating the operation unit 14 of the dialogue device 10, sets the dialogue device 10 in a first mode. In the first mode, voice information of a passenger (hereinafter, simply referred to as a first passenger) who is permitted to perform driving operation of the vehicle is collected. The first passenger talking to the dialogue device 10 when the dialogue device 10 is set in the first mode causes voice information of the first passenger to be collected via the voice microphone 12. The registration unit 24 registers the voice information of the first passenger into the setting information storage unit 26, which will be described later.

Next, voice information of a passenger who is permitted to perform vehicle operation that is different from the driving operation is collected. Examples of such vehicle operation that is different from the driving operation include opening a window of the vehicle. Regarding an operation of opening a window, a passenger who is not the driver can be sometimes permitted to perform the operation.

Thus, in a case in which vehicle operation that is different from the driving operation is permitted for another passenger who is not the driver, the predetermined passenger, by operating the operation unit 14 of the dialogue device 10, sets the dialogue device 10 in a second mode. In the second mode, voice information of a passenger (hereinafter, simply referred to as a second passenger) who is not permitted to perform the driving operation of the vehicle and is permitted to perform vehicle operation different from the driving operation of the vehicle is collected.

The second passenger talking to the dialogue device 10 when the dialogue device 10 is set in the second mode causes voice information of the second passenger to be collected via the voice microphone 12. The registration unit 24 registers the voice information of the second passenger into the setting information storage unit 26, which will be described later.

However, it is sometimes preferable to restrict, for example, an operation of a child passenger opening a window though the operation is a vehicle operation different from the driving operation. Thus, in a case in which a passenger who is preferably restricted from performing a vehicle operation even when the vehicle operation is different from the driving operation is on board the vehicle, the predetermined passenger, by operating the operation unit 14 of the dialogue device 10, sets the dialogue device 10 in a third mode. In the third mode, voice information of a passenger (hereinafter, simply referred to as a third passenger) who is neither permitted to perform the driving operation of the vehicle nor to perform vehicle operation different from the driving operation of the vehicle is collected.

The third passenger talking to the dialogue device 10 when the dialogue device 10 is set in the third mode causes voice information of the third passenger to be collected via the voice microphone 12. The registration unit 24 registers the voice information of the third passenger into the setting information storage unit 26, which will be described later.

In the setting information storage unit 26, setting information and voice information of each passenger registered by the registration unit 24 are stored. The setting information and the voice information of each passenger are, for example, stored in a form of a table as illustrated in Fig. 4. In each record in the table illustrated in Fig. 4, an ID representing identification information of a passenger, voice information of the passenger, and setting information indicating a type(s) of operation that the passenger is permitted to perform are stored in association with one another. As voice information of a passenger, for example, frequency information of a voice of the passenger is stored.

For example, referring to the table illustrated in Fig. 4, a passenger with an ID "00001" is permitted to perform driving operation, vehicle operation different from the driving operation, and other operation.

A passenger with an ID "00002" is permitted to perform vehicle operation different from the driving operation and other operation. For example, the passenger with the ID "00002" is permitted to perform an operation of opening and closing a window of the vehicle and the like.

Passengers with IDs "00003" and "00004" are permitted to perform only other operation. For example, the passengers with the IDs "00003" and "00004" are permitted to perform an operation of playing music and the like as other operation.

In a case in which an utterance from a passenger has been acquired by the acquisition unit 20, the recognition unit 28 recognizes the passenger who emitted the utterance. Specifically, the recognition unit 28 recognizes which one of a first passenger, a second passenger, and a third passenger the passenger who emitted the utterance is based on the utterance from the passenger acquired by the acquisition unit 20 and voice information stored in the setting information storage unit 26.

The control unit 30 controls a driving operation of the vehicle indicated by an utterance from a passenger, based on a recognition result of the passenger obtained by the recognition unit 28 and setting information stored in the setting information storage unit 26.

Specifically, in a case in which a passenger who emitted an utterance is a first passenger and a content of the utterance is a content relating to driving operation of the vehicle, the control unit 30 outputs a control signal that indicates performing the driving operation according to the content of the utterance from the first passenger.

For example, in a case in which a passenger who emitted an utterance is the passenger with the ID "00001" as illustrated in Fig. 4 described above, the control unit 30 outputs a control signal that indicates performing a driving operation according to the utterance from the passenger.

In a case in which a passenger who emitted an utterance is a second passenger and a content of the utterance is a content relating to driving operation of the vehicle, the control unit 30 outputs a control signal that indicates restricting the driving operation according to the content of the utterance from the passenger.

For example, in a case in which a passenger who emitted an utterance is any of the passengers with the IDs "00002", "00003", and "00004" as illustrated in Fig. 4 described above, the control unit 30 outputs a control signal that indicates restricting all driving operation.

In a case in which a passenger who emitted an utterance is a second passenger and a content of the utterance is a content relating to an operation different from the driving operation of the vehicle, the control unit 30 outputs a control signal that indicates performing the operation different from the driving operation of the vehicle according to the content of the utterance.

For example, in a case in which a passenger who emitted an utterance is the passenger with the ID "00002", the passenger, although being a passenger who is not permitted to perform the driving operation of the vehicle, is a passenger who is permitted to perform vehicle operation different from the driving operation of the vehicle, as illustrated in Fig. 4 described above. Thus, in a case in which the passenger with the ID "00002" emitted an utterance "Open the window", the control unit 30 outputs a control signal that indicates an operation of "opening a window", which is a vehicle operation different from the driving operation. In a case in which the passenger with the ID "00002" emitted an utterance "Switch to automatic driving" and the like, however, the control unit 30 restricts a driving operation instructed by the utterance.

For example, in a case in which a passenger who emitted an utterance is either the passenger with the ID "00003" or the passenger with the ID "00004", the passenger, although being a passenger who is not permitted to perform the driving operation of the vehicle, is permitted to perform other operation, as illustrated in Fig. 4 described above. Thus, in a case in which either the passenger with the ID "00003" or the passenger with the ID "00004" emitted an utterance "Play music", the control unit 30 outputs a control signal that indicates an operation of "playing music", which is one other operation. In a case in which either the passenger with the ID "00003" or the passenger with the ID "00004" emitted an utterance "Switch to automatic driving.", "Open the window", or the like, however, the control unit 30 restricts operations instructed by the utterances.

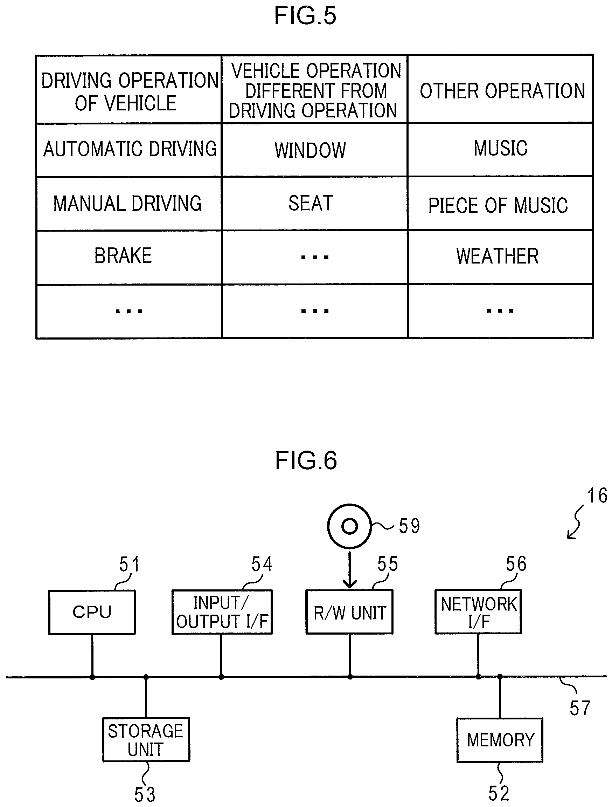

Whether or not a content of an utterance is driving operation of the vehicle is determined in advance, based on, for example, word information as illustrated in Fig. 5. For example, in a case in which a word(s) "automatic driving", "manual driving", "brake", or the like is/are included in an utterance, the control unit 30 determines the utterance to be an utterance relating to driving operation of the vehicle. In a case in which a word "window", "seat", or the like is included in an utterance, the control unit 30 determines the utterance to be an utterance relating to vehicle operation different from the driving operation. In a case in which a word(s) "music", "piece of music", "weather", or the like is/are included in an utterance, the utterance is determined to be an utterance relating to operation different from the vehicle operation.

The ECU mounted in the vehicle acquires a control signal output from the control unit 30. The ECU controls the vehicle according to the control signal output from the control unit 30.

The computer 16 in the dialogue device 10 may, for example, be achieved by a configuration as illustrated in Fig. 6. The computer 16 includes a CPU 51, a memory 52 as a temporary storage area, and a nonvolatile storage unit 53. The computer 16 also includes an input/output interface (I/F) 54 to which an input/output device and the like (illustration omitted) are connected and a read/write (R/W) unit 55 that controls reading and writing of data from and to a recording medium 59. The computer 16 still also includes a network I/F 56 that is connected to a network, such as the Internet. The CPU 51, the memory 52, the storage unit 53, the input/output I/F 54, the R/W unit 55, and the network I/F 56 are interconnected via a bus 57.

The storage unit 53 may be achieved by a hard disk drive (HDD), a solid state drive (SSD), a flash memory, or the like. In the storage unit 53 serving as a storage medium, a program for making the computer 16 function is stored. The CPU 51 reads the program from the storage unit 53, expands the program in the memory 52, and successively executes processes that the program includes. This configuration enables the CPU 51 in the computer 16 to function as each of the acquisition unit 20, the information generation unit 22, the registration unit 24, the setting information storage unit 26, the recognition unit 28, and the control unit 30. The acquisition unit 20, the recognition unit 28 and the control unit 30 are respectively examples of an acquisition unit, a recognition unit and a control unit of the present disclosure.

Next, operation of the embodiment will be described.

A predetermined passenger, by operating the operation unit 14 of the dialogue device 10, sets the dialogue device 10 in each mode. The registration unit 24 registers voice information of a first passenger, voice information of a second passenger(s), and voice information of a third passenger(s) into the setting information storage unit 26. This operation causes voice information and setting information of each passenger to be stored in the setting information storage unit 26.

Next, when the dialogue device 10 is brought in into a vehicle, the control unit 30 in the dialogue device 10 detects that the dialogue device 10 is inside the vehicle. The control unit 30 in the dialogue device 10 sets the dialogue device 10 in the driving mode. This operation enables driving operation of the vehicle to be performed according to an utterance emitted by a driver who was registered in advance. Regarding a passenger who is not the driver, an operation that was set in advance is enabled according to an utterance emitted by the passenger.

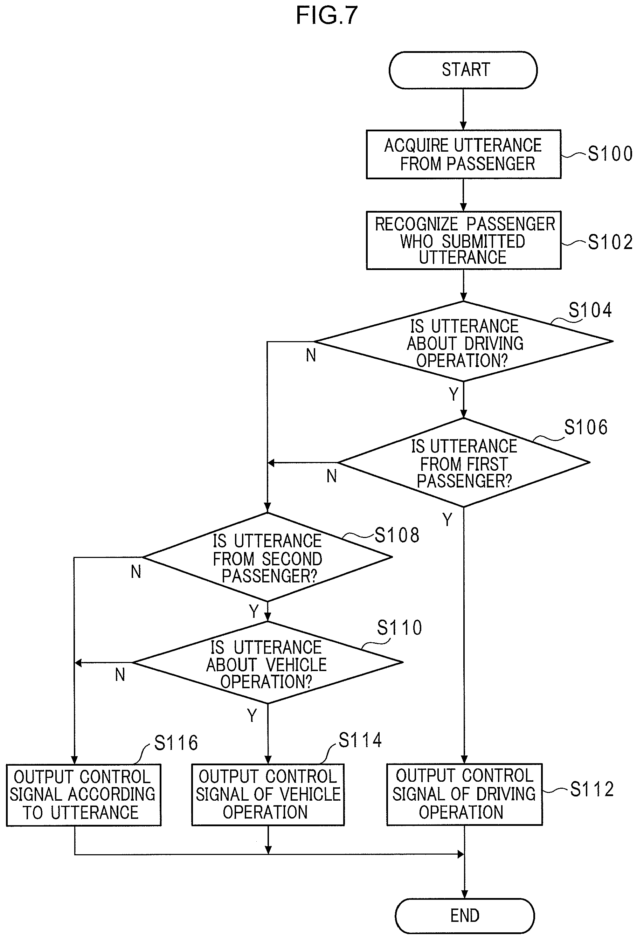

When, after traveling of the vehicle has been started, a passenger in the vehicle talks to the dialogue device 10, a driving operation processing routine illustrated in Fig. 7 is executed.

In step S100, the acquisition unit 20 acquires an utterance detected by the voice microphone 12.

In step S102, the recognition unit 28 recognizes which one of a first passenger, a second passenger, and a third passenger the passenger who emitted the utterance is based on the utterance emitted by the passenger acquired in the above step S100 and voice information stored in the setting information storage unit 26.

In step S104, the control unit 30 determines whether or not a content of the utterance acquired in the above step S100 is a content relating to driving operation of the vehicle. For example, the content of the utterance is determined depending on whether or not any word illustrated in Fig. 5 described above is included in the utterance. In a case in which the content of the utterance acquired in the above step S100 is a content relating to driving operation of the vehicle, the process proceeds to step S106. In a case in which the content of the utterance acquired in the above step S100 is a content relating to an operation different from the driving operation of the vehicle, the process proceeds to step S108.

In step S106, the control unit 30 determines whether or not the passenger who emitted the utterance acquired in the above step S100 is a first passenger. In a case in which the passenger who emitted the utterance acquired in the above step S100 is a first passenger, the process proceeds to step S112. In a case in which the passenger who emitted the utterance acquired in the above step S100 is not a first passenger, the process proceeds to step S108. This operation causes driving operation of the vehicle to be restricted based on a recognition result of a passenger.

In step S108, the control unit 30 determines whether or not the passenger who emitted the utterance acquired in the above step S100 is a second passenger. In a case in which the passenger who emitted the utterance acquired in the above step S100 is a second passenger, the process proceeds to step S110. In a case in which the passenger who emitted the utterance acquired in the above step S100 is not a second passenger, the process proceeds to step S116. This operation causes vehicle operation different from the driving operation of the vehicle to be restricted based on a recognition result of a passenger.

In step S110, the control unit 30 determines whether or not a content of the utterance acquired in the above step S100 is a content relating to vehicle operation different from the driving operation of the vehicle. In a case in which the content of the utterance acquired in the above step S100 is a content relating to vehicle operation different from the driving operation of the vehicle, the process proceeds to step S114. In a case in which the content of the utterance acquired in the above step S100 is a content relating to an operation different from the driving operation of the vehicle and relating to other operation, the process proceeds to step S116.

In step S112, the control unit 30 outputs a control signal that indicates performing driving operation according to a content of the utterance acquired in the above step S100 and finishes the driving operation processing routine. For example, in a case in which the content of the utterance is "Switch to automatic driving", a control signal according to the content is output.

In step S114, the control unit 30 outputs a control signal that indicates performing vehicle operation different from the driving operation of the vehicle according to a content of the utterance acquired in the above step S100. For example, a control signal indicating a content of an utterance "Open the window" is output.

In step S116, the control unit 30 outputs a control signal that indicates performing other operation according to a content of the utterance acquired in the above step S100. For example, a control signal indicating a content of an utterance "Play music" is output.

As described thus far, the dialogue device according to the first embodiment recognizes a passenger according to an utterance emitted by the passenger and, based on a recognition result of the passenger, restricts driving operation of the vehicle indicated by the utterance from the passenger. This configuration enables driving operation of the vehicle to be performed appropriately even in a case in which plural passengers are on board the vehicle when the driving operation of the vehicle is performed according to an utterance emitted by a passenger.

The dialogue device according to the first embodiment outputs a control signal that indicates performing driving operation according to a content of an utterance emitted by a passenger in a case in which, based on a recognition result of the passenger and setting information having been set in advance, the passenger who emitted the utterance is a first passenger who is permitted to perform driving operation of the vehicle and the content of the utterance is a content relating to the driving operation of the vehicle. This configuration enables driving operation in accordance with a content of an utterance that the driver emitted to be performed.

The dialogue device outputs a control signal that indicates restricting driving operation according to a content of an utterance emitted by a passenger in a case in which the passenger who emitted the utterance is a passenger who is not permitted to perform driving operation of the vehicle and the content of the utterance is a content relating to the driving operation of the vehicle. This configuration enables driving operation of the vehicle to be restricted appropriately even in a case in which an utterance having a content relating to the driving operation was emitted by a passenger who is not the driver.

The dialogue device outputs a control signal that indicates performing an operation different from the driving operation of the vehicle in a case in which a passenger who emitted an utterance is a second passenger or a third passenger and a content of the utterance is a content relating to an operation different from the driving operation of the vehicle. This configuration enables an operation different from the driving operation of the vehicle to be performed according to a content of an utterance emitted by a passenger as long as the content of the utterance is a content relating to an operation different from the driving operation of the vehicle even in a case in which the passenger who emitted the utterance is a second passenger or a third passenger.

### <Second Embodiment

Next, a dialogue device according to a second embodiment will be described. The same signs are assigned to the same constituent components as those in the first embodiment and a description thereof will be omitted.

The dialogue device of the second embodiment is the same as the dialogue device of the first embodiment except that the dialogue device of the second embodiment outputs a control signal that indicates performing driving operation according to an utterance emitted by a driver who is a passenger performing steering operation of a vehicle.

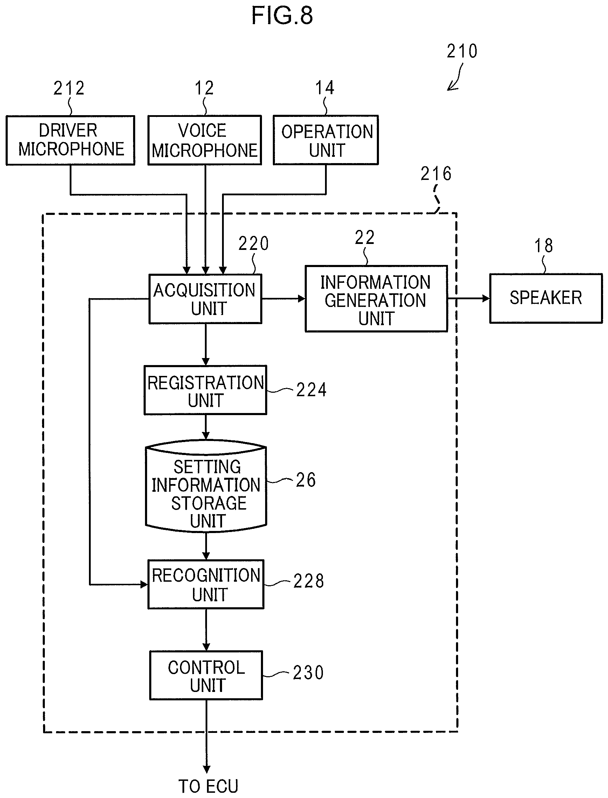

Fig. 8 is a block diagram illustrating an example of a configuration of a dialogue device 210 according to the second embodiment. As illustrated in Fig. 8, the dialogue device 210 includes a voice microphone 12, a driver microphone 212, an operation unit 14, and a computer 216.

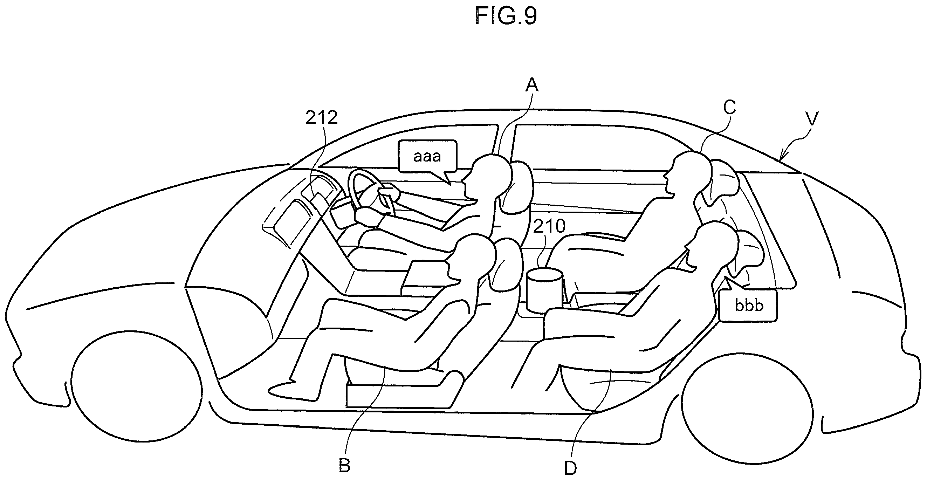

The driver microphone 212 is installed in a vicinity of a driver A who is a passenger performing steering operation, as illustrated in Fig. 9. The driver microphone 212 successively acquires utterances emitted by the driver A.

The computer 216 is configured including a CPU, a ROM storing a program and the like for achieving respective processing routines, a RAM storing data temporarily, a memory serving as a storage unit, a network interface, and the like. The computer 216 functionally includes an acquisition unit 220, a registration unit 224, a setting information storage unit 26, a recognition unit 228, and a control unit 230. The driver microphone 212 and the computer 216 are, for example, interconnected using a predetermined communication unit.

The acquisition unit 220 successively acquires utterances from passengers acquired by the voice microphone 12. The acquisition unit 220 also successively acquires utterances from the driver acquired by the driver microphone 212.

The registration unit 224 registers voice information of an utterance from the driver acquired by the driver microphone 212 into the setting information storage unit 26 as voice information of a first passenger.

The recognition unit 228 recognizes whether or not a passenger who emitted an utterance is the driver. Specifically, the recognition unit 228 recognizes that an utterance acquired by the driver microphone 212 is an utterance emitted by the driver. Alternatively, the recognition unit 228 recognizes whether or not a passenger who emitted an utterance acquired by the voice microphone 12 is the driver, based on the utterance acquired by the acquisition unit 220 and voice information of the first passenger stored in the registration unit 224.

In a case in which, based on a recognition result obtained by the recognition unit 228, a passenger who emitted an utterance acquired by the acquisition unit 220 is determined to be the driver, the control unit 230 outputs a control signal that indicates performing driving operation of the vehicle according to a content of the utterance.

Since other components and operation of the dialogue device 210 according to the second embodiment are the same as those in the first embodiment, a description thereof will be omitted.

As described thus far, according to the dialogue device 210 according to the second embodiment, the dialogue device 210 recognizes whether or not a passenger who emitted an utterance is the driver who performs steering operation of the vehicle and outputs a control signal that indicates performing driving operation according to a content of the utterance from the driver. This configuration enables driving operation of the vehicle to be performed only according to an utterance emitted by the driver.

Although the processing performed by the dialogue device in the embodiments described above was described as software processing performed by executing a program, the processing may be configured to be performed by hardware. Alternatively, the processing may be configured to be performed by a combination of both software and hardware. The program to be stored in the ROM may be distributed stored in various types of storage media.

The present disclosure is not limited to the above embodiments, and it is needless to say that various modifications other than those described above may be made and implemented without departing from the subject matter of the present disclosure.

For example, each of dialogue devices in the embodiments described above may be achieved by a mobile terminal and the like. In this case, driving operation and the like according to an utterance emitted by a passenger is performed based on a dialogue function of the mobile terminal.

Although, in the embodiments described above, the description was made using, as an example, a case in which the control unit 30 outputs a control signal that indicates restricting driving operation according to a content of an utterance emitted by a passenger in a case in which the passenger who emitted the utterance is a passenger who is not permitted to perform driving operation of the vehicle and the content of the utterance is a content relating to the driving operation of the vehicle, the present disclosure is not limited to the case. For example, the control unit 30 may be configured to, without outputting a control signal, restrict driving operation according to an utterance emitted by a passenger who is not permitted to perform the driving operation of the vehicle. In this case, the control unit 30 outputs a control signal only in a case in which the passenger who emitted the utterance is a passenger who is permitted to perform the driving operation of the vehicle and a content of the utterance is a content relating to the driving operation of the vehicle. The control unit 30 does not output a control signal, thereby restricting the driving operation in a case in which the passenger who emitted the utterance is a passenger who is not permitted to perform the driving operation of the vehicle and a content of the utterance is a content relating to the driving operation of the vehicle.

## Claims

1. An information processing device comprising:
an acquisition unit (20) that is configured to acquire utterances from a plurality of passengers who are on board a vehicle;
a recognition unit (28) that is configured, in a case in which an utterance is acquired by the acquisition unit (20), to recognize one of the passengers who emitted the utterance; and
a control unit (30) that is configured to control driving operation of the vehicle indicated by the utterance from the passenger, based on a recognition result of the passenger who emitted the utterance and on setting information that is information having been set in advance with respect to each of the plurality of passengers and that is information about whether or not the passenger is a passenger who is permitted to perform the driving operation of the vehicle; wherein:
the control unit is configured, based on a recognition result of the passengers obtained by the recognition unit (28) and the setting information, to output a first control signal that indicates performing driving operation of the vehicle according to a content of an utterance emitted from a first passenger, in a case in which the first passenger who is recognized to have emitted the utterance is a passenger who is permitted to perform the driving operation and the content of the utterance emitted from the first passenger relates to the driving operation;
the setting information further includes information about whether or not the passenger is a passenger who is permitted to perform vehicle operation that is different from the driving operation, and
the control unit (30) is configured, based on a recognition result of the passenger obtained by the recognition unit (28) and the setting information, to output a second control signal that indicates performing the vehicle operation different from the driving operation of the vehicle according to a content of a utterance emitted from a second passenger, in a case in which the second passenger who is recognized to have emitted the utterance is a passenger who is not permitted to perform the driving operation of the vehicle and is a passenger who is permitted to perform the vehicle operation different from the driving operation of the vehicle, and the content of the utterance emitted from the second passenger relates to the vehicle operation different from the driving operation of the vehicle.

2. The information processing device according to claim 1, wherein
the control unit (30) is configured, based on a recognition result of the passengers obtained by the recognition unit (28) and the setting information, to output a third control signal that indicates restricting the driving operation of the vehicle according to a content of an utterance emitted from a third passenger, in a case in which the third passenger who is recognized to have emitted the utterance is a passenger who is not permitted to perform the driving operation and the content of the utterance emitted from the third passenger relates to the driving operation.

3. The information processing device according to claims 1 or 2,
wherein the control unit (30) is configured to set the information processing device in a state in which the driving operation can be performed according to an utterance from the passenger in a case in which a position of the information processing device is inside the vehicle.

4. The information processing device according to any one of claims 1 to 3, wherein
the recognition unit (28) is configured to recognize whether or not the passenger who emitted the utterance is a driver, and
the control unit (30) is configured to output a fourth control signal that indicates performing the driving operation according to a content of the utterance from the driver.

5. The information processing device according to any one of claims 1 to 4,
wherein the information processing device is a dialogue device that performs a dialogue with the passengers.

6. A program causing a computer to execute processing comprising:
acquiring utterances from a plurality of passengers who are on board a vehicle;
in a case in which an utterance is acquired, recognizing one of the passengers who emitted the utterance; and
controlling driving operation of the vehicle indicated by the utterance from the passenger, based on a recognition result of the passenger who emitted the utterance and on setting information that is information having been set in advance with respect to each of the plurality of passengers, that is information about whether or not the passenger is a passenger who is permitted to perform the driving operation of the vehicle and that includes information about whether or not the passenger is a passenger who is permitted to perform vehicle operation that is different from the driving operation,
outputting a first control signal that indicates performing driving operation of the vehicle according to a content of an utterance emitted from a first passenger, in a case in which the first passenger who is recognized to have emitted the utterance is a passenger who is permitted to perform the driving operation and the content of the utterance emitted from the first passenger relates to the driving operation, and
outputting a second control signal that indicates performing the vehicle operation different from the driving operation of the vehicle according to a content of a utterance emitted from a second passenger, in a case in which the second passenger who is recognized to have emitted the utterance is a passenger who is not permitted to perform the driving operation of the vehicle and is a passenger who is permitted to perform the vehicle operation different from the driving operation of the vehicle, and the content of the utterance emitted from the second passenger relates to the vehicle operation different from the driving operation of the vehicle.

7. An information processing method comprising:
in a case in which an utterance emitted by one of a plurality of passengers who are on board a vehicle is acquired, recognizing the passenger who emitted the utterance; and
controlling driving operation of the vehicle indicated by the utterance from the passenger, based on a recognition result of the passenger who emitted the utterance and on setting information that is information having been set in advance with respect to each of the plurality of passengers, that is information about whether or not the passenger is a passenger who is permitted to perform the driving operation of the vehicle and that includes information about whether or not the passenger is a passenger who is permitted to perform vehicle operation that is different from the driving operation,
outputting a first control signal that indicates performing driving operation of the vehicle according to a content of an utterance emitted from a first passenger, in a case in which the first passenger who is recognized to have emitted the utterance is a passenger who is permitted to perform the driving operation and the content of the utterance emitted from the first passenger relates to the driving operation, and
outputting a second control signal that indicates performing the vehicle operation different from the driving operation of the vehicle according to a content of a utterance emitted from a second passenger, in a case in which the second passenger who is recognized to have emitted the utterance is a passenger who is not permitted to perform the driving operation of the vehicle and is a passenger who is permitted to perform the vehicle operation different from the driving operation of the vehicle, and the content of the utterance emitted from the second passenger relates to the vehicle operation different from the driving operation of the vehicle.

## Patentansprüche

1. Informationsverarbeitungsvorrichtung, die Folgendes umfasst:
eine Erfassungseinheit (20), die konfiguriert ist, um Äußerungen von einer Vielzahl von Passagieren zu erfassen, die sich an Bord eines Fahrzeugs befinden;
eine Erkennungseinheit (28), die konfiguriert ist, um in einem Fall, in dem eine Äußerung durch die Erfassungseinheit (20) erfasst wird, einen der Passagiere zu erkennen, von dem die Äußerung ausging; und
eine Steuerungseinheit (30), die konfiguriert ist, um einen Fahrbetrieb des Fahrzeugs zu steuern, der durch die Äußerung des Passagiers angegeben wird, basierend auf einem Erkennungsergebnis des Passagiers, von dem die Äußerung ausging und auf Einstellungsinformationen, bei denen es sich um Informationen handelt, die im Voraus im Hinblick auf jeden der Vielzahl von Passagieren eingestellt wurden und bei denen es sich um Informationen darüber handelt, ob der Passagier ein Passagier ist, dem es gestattet ist, den Fahrbetrieb des Fahrzeugs auszuführen oder nicht; wobei:
die Steuerungseinheit konfiguriert ist, um, basierend auf einem Erkennungsergebnis der Passagiere, das durch die Erkennungseinheit (28) erhalten wurde, und den Einstellungsinformationen ein erstes Steuerungssignal auszugeben, das ein Ausführen eines Fahrbetriebs des Fahrzeugs gemäß einem Inhalt einer Äußerung, die von einem ersten Passagier ausgeht, angibt, in einem Fall, in dem der erste Passagier, von dem erkannt wurde, dass die Äußerung von ihm ausging, ein Passagier ist, dem es gestattet ist, den Fahrbetrieb auszuführen und in dem sich der Inhalt der von dem ersten Passagier ausgehenden Äußerung auf den Fahrbetrieb bezieht;
die Einstellungsinformationen ferner Informationen darüber umfassen, ob es sich bei dem Passagier um einen Passagier handelt, dem es gestattet ist, einen Fahrzeugbetrieb auszuführen, die sich von dem Fahrbetrieb unterscheidet, oder nicht, und
die Steuerungseinheit (30) konfiguriert ist, um, basierend auf einem Erkennungsergebnis des Passagiers, das durch die Erkennungseinheit (28) erhalten wurde, und den Einstellungsinformationen ein zweites Steuerungssignal auszugeben, das ein Ausführen des Fahrzeugbetriebs, der sich von dem Fahrbetrieb des Fahrzeugs unterscheidet, gemäß einem Inhalt einer Äußerung, die von einem zweiten Passagier ausgeht, angibt, in einem Fall, in dem der zweite Passagier, von dem erkannt wurde, dass die Äußerung von ihm ausging, ein Passagier ist, dem es nicht gestattet ist, den Fahrbetrieb des Fahrzeugs auszuführen und ein Passagier ist, dem es gestattet ist, den Fahrzeugbetrieb, der sich von dem Fahrbetrieb des Fahrzeugs unterscheidet, auszuführen, und in dem sich der Inhalt der von dem zweiten Passagier ausgehenden Äußerung auf den Fahrzeugbetrieb bezieht, der sich von dem Fahrbetrieb des Fahrzeugs unterscheidet.

2. Informationsverarbeitungsvorrichtung nach Anspruch 1, wobei
die Steuerungseinheit (30) konfiguriert ist, um, basierend auf einem Erkennungsergebnis der Passagiere, das durch die Erkennungseinheit (28) erhalten wurde, und den Einstellungsinformationen ein drittes Steuerungssignal auszugeben, das ein Einschränken des Fahrbetriebs des Fahrzeugs gemäß einem Inhalt einer Äußerung, die von einem dritten Passagier ausgeht, angibt, in einem Fall, in dem der dritte Passagier, von dem erkannt wurde, dass die Äußerung von ihm ausging, ein Passagier ist, dem es nicht gestattet ist, den Fahrbetrieb auszuführen und in dem sich der Inhalt der von dem dritten Passagier ausgehenden Äußerung auf den Fahrbetrieb bezieht.

3. Informationsverarbeitungsvorrichtung nach Anspruch 1 oder 2,
wobei die Steuerungseinheit (30) konfiguriert ist, um die Informationsverarbeitungsvorrichtung in einen Zustand zu versetzen, in dem der Fahrbetrieb gemäß einer Äußerung von dem Passagier ausgeführt werden kann, in einem Fall, in dem eine Position der Informationsverarbeitungsvorrichtung innerhalb des Fahrzeugs ist.

4. Informationsverarbeitungsvorrichtung nach einem der Ansprüche 1 bis 3, wobei
die Erkennungseinheit (28) konfiguriert ist, um zu erkennen, ob der Passagier, von dem die Äußerung ausging, ein Fahrer ist oder nicht, und
die Steuerungseinheit (30) konfiguriert ist, um ein viertes Steuerungssignal auszugeben, das ein Ausführen des Fahrbetriebs gemäß einem Inhalt der Äußerung von dem Fahrer angibt.

5. Informationsverarbeitungsvorrichtung nach einem der Ansprüche 1 bis 4,
wobei die Informationsverarbeitungsvorrichtung eine Dialogvorrichtung ist, die einen Dialog mit den Passagieren ausführt.

6. Programm, das einen Computer veranlasst, eine Verarbeitung auszuführen, umfassend:
Erfassen von Äußerungen von einer Vielzahl von Passagieren, die sich an Bord eines Fahrzeugs befinden;
in einem Fall, in dem eine Äußerung erfasst wird, Erkennen eines der Passagiere, von dem die Äußerung ausging; und
Steuern eines Fahrbetriebs des Fahrzeugs, der durch die Äußerung von dem Passagier angegeben wird, basierend auf einem Erkennungsergebnis des Passagiers, von dem die Äußerung ausging, und auf Einstellungsinformationen, bei denen es sich um Informationen handelt, die im Voraus im Hinblick auf jeden der Vielzahl von Passagieren eingestellt wurden, bei denen es sich um Informationen darüber handelt, ob der Passagier ein Passagier ist, dem es gestattet ist, den Fahrbetrieb des Fahrzeugs auszuführen oder nicht und die Informationen darüber umfassen, ob der Passagier ein Passagier ist, dem es gestattet ist, den Fahrzeugbetrieb, der sich von dem Fahrbetrieb unterscheidet, auszuführen oder nicht,
Ausgeben eines ersten Steuerungssignals, das ein Ausführen eines Fahrbetriebs des Fahrzeugs gemäß einem Inhalt einer Äußerung, die von einem ersten Passagier ausgeht, angibt, in einem Fall, in dem der erste Passagier, von dem erkannt wurde, dass die Äußerung von ihm ausging, ein Passagier ist, dem es gestattet ist, den Fahrbetrieb auszuführen und in dem sich der Inhalt der von dem ersten Passagier ausgehenden Äußerung auf den Fahrbetrieb bezieht, und
Ausgeben eines zweiten Steuerungssignals, das ein Ausführen eines Fahrzeugbetriebs, der sich von dem Fahrbetrieb des Fahrzeugs unterscheidet, gemäß einem Inhalt einer Äußerung, die von einem zweiten Passagier ausgeht, angibt, in einem Fall, in dem der zweite Passagier, von dem erkannt wurde, dass die Äußerung von ihm ausging, ein Passagier ist, dem es nicht gestattet ist, den Fahrbetrieb des Fahrzeugs auszuführen und ein Passagier ist, dem es gestattet ist, den Fahrzeugbetrieb, der sich von dem Fahrbetrieb des Fahrzeugs unterscheidet, auszuführen, und in dem sich der Inhalt der von dem zweiten Passagier ausgehenden Äußerung auf den Fahrzeugbetrieb bezieht, der sich von dem Fahrbetrieb des Fahrzeugs unterscheidet.

7. Informationsverarbeitungsverfahren, das Folgendes umfasst:
in einem Fall, in dem eine Äußerung erworben wird, die von einem einer Vielzahl von Passagieren ausgeht, die sich an Bord eines Fahrzeugs befinden, Erkennen des Passagiers, von dem die Äußerung ausging; und
Steuern eines Fahrbetriebs des Fahrzeugs, der durch die Äußerung von dem Passagier angegeben wird, basierend auf einem Erkennungsergebnis des Passagiers, von dem die Äußerung ausging, und auf Einstellungsinformationen, bei denen es sich um Informationen handelt, die im Voraus im Hinblick auf jeden der Vielzahl von Passagieren eingestellt wurden, bei denen es sich um Informationen darüber handelt, ob der Passagier ein Passagier ist, dem es gestattet ist, den Fahrbetrieb des Fahrzeugs auszuführen oder nicht und die Informationen darüber umfassen, ob der Passagier ein Passagier ist, dem es gestattet ist, einen Fahrzeugbetrieb, die sich von dem Fahrbetrieb unterscheidet, auszuführen oder nicht,
Ausgeben eines ersten Steuerungssignals, das ein Ausführen eines Fahrbetriebs des Fahrzeugs gemäß einem Inhalt einer Äußerung, die von einem ersten Passagier ausgeht, angibt, in einem Fall, in dem der erste Passagier, von dem erkannt wurde, dass die Äußerung von ihm ausging, ein Passagier ist, dem es gestattet ist, den Fahrbetrieb auszuführen und in dem sich der Inhalt der von dem ersten Passagier ausgehenden Äußerung auf den Fahrbetrieb bezieht, und
Ausgeben eines zweiten Steuerungssignals, das ein Ausführen des Fahrzeugbetriebs, der sich von dem Fahrbetrieb des Fahrzeugs unterscheidet, gemäß einem Inhalt einer Äußerung, die von einem zweiten Passagier ausgeht, angibt, in einem Fall, in dem der zweite Passagier, von dem erkannt wurde, dass die Äußerung von ihm ausging, ein Passagier ist, dem es nicht gestattet ist, den Fahrbetrieb des Fahrzeugs auszuführen und ein Passagier ist, dem es gestattet ist, den Fahrzeugbetrieb, der sich von dem Fahrbetrieb des Fahrzeugs unterscheidet, auszuführen, und in dem sich der Inhalt der von dem zweiten Passagier ausgehenden Äußerung auf den Fahrzeugbetrieb bezieht, der sich von dem Fahrbetrieb des Fahrzeugs unterscheidet.

## Revendications

1. Dispositif de traitement d'informations comprenant :
une unité d'acquisition (20) qui est configurée pour acquérir des énoncés d'une pluralité de passagers qui sont à bord d'un véhicule ;
une unité de reconnaissance (28) qui est configurée, dans un cas où un énoncé est acquis par l'unité d'acquisition (20), pour reconnaître l'un des passagers qui a émis l'énoncé ; et
une unité de contrôle (30) qui est configurée pour contrôler l'opération de conduite du véhicule indiqué par l'énoncé du passager, sur la base d'un résultat de reconnaissance du passager qui a émis l'énoncé et sur la définition d'informations qui sont des informations qui ont été définies à l'avance par rapport à chacun de la pluralité de passagers et qui sont des informations indiquant si le passager est un passager qui est autorisé à effectuer l'opération de conduite du véhicule ;
dans lequel :
l'unité de contrôle est configurée, sur la base d'un résultat de reconnaissance des passagers obtenu par l'unité de reconnaissance (28) et les informations de réglage, pour émettre un premier signal de contrôle indiquant l'exécution d'une opération de conduite du véhicule en fonction d'un contenu d'un énoncé émis par un premier passager, dans le cas où le premier passager reconnu avoir émis l'énoncé est un passager autorisé à effectuer l'opération de conduite et le contenu de l'énoncé émis par le premier passager se rapporte à l'opération de conduite ;
les informations de réglage incluent en outre des informations indiquant si le passager est un passager qui est autorisé à effectuer une opération du véhicule différente de l'opération de conduite, et
l'unité de contrôle (30) est configurée, sur la base d'un résultat de reconnaissance du passager obtenu par l'unité de reconnaissance (28) et les informations de réglage, pour émettre un deuxième signal de contrôle indiquant l'exécution d'une opération du véhicule différente de l'opération de conduite du véhicule en fonction d'un contenu d'un énoncé émis par un deuxième passager, dans le cas où le deuxième passager qui est reconnu avoir émis l'énoncé est un passager qui n'est pas autorisé à effectuer l'opération de conduite du véhicule et qui est autorisé à effectuer l'opération de véhicule différente de l'opération de conduite du véhicule, et le contenu de l'énoncé émis par le deuxième passager concerne l'opération du véhicule différente de l'opération de conduite du véhicule .

2. Dispositif de traitement d'informations selon la revendication 1, dans lequel l'unité de contrôle (30) est configurée, sur la base d'un résultat de reconnaissance des passagers obtenu par l'unité de reconnaissance (28) et les informations de réglage, pour émettre un troisième signal de contrôle indiquant la restriction de l'opération de conduite du véhicule en fonction du contenu d'un énoncé émis par un troisième passager, dans un cas où le troisième passager qui est reconnu avoir émis cet énoncé est un passager qui n'est pas autorisé à effectuer l'opération de conduite et le contenu de l'énoncé émis par le troisième passager concerne l'opération de conduite.

3. Dispositif de traitement d'informations selon les revendications 1 ou 2,
dans lequel l'unité de contrôle (30) est configurée pour régler le dispositif de traitement d'informations à un état dans lequel l'opération de conduite peut être effectuée en fonction d'un énoncé du passager dans un cas où une position du dispositif de traitement d'informations se trouve à l'intérieur du véhicule.

4. Dispositif de traitement d'informations selon l'une quelconque des revendications 1 à 3,
dans lequel l'unité de reconnaissance (28) est configurée pour reconnaître si le passager qui a émis l'énoncé est un conducteur, et
l'unité de contrôle (30) est configurée pour émettre un quatrième signal de contrôle indiquant l'exécution de l'opération de conduite en fonction d'un contenu de l'énoncé du conducteur.

5. Dispositif de traitement d'informations selon l'une quelconque des revendications 1 à 4, dans lequel le dispositif de traitement d'informations est un dispositif de dialogue qui réalise un dialogue avec les passagers.

6. Programme amenant un ordinateur à exécuter un traitement comprenant :
l'acquisition d'énoncés d'une pluralité de passagers qui sont à bord d'un véhicule ;
dans le cas où un énoncé est acquis, la reconnaissance de l'un des passagers qui a émis l'énoncé; et
le contrôle de l'opération de conduite du véhicule indiquée par l'énoncé du passager, sur la base d'un résultat de reconnaissance du passager qui a émis l'énoncé et sur la définition d'informations qui sont des informations qui ont été définies à l'avance par rapport à chacun de la pluralité de passagers, qui sont des informations indiquant si le passager est un passager qui est autorisé à effectuer l'opération de conduite du véhicule et qui inclut des informations indiquant si le passager est un passager autorisé à effectuer une opération du véhicule qui est différente de la conduite,
l'émission d'un premier signal de contrôle indiquant l'exécution d'une opération de conduite du véhicule en fonction d'un contenu d'un énoncé émis par un premier passager, dans le cas où le premier passager qui est reconnu avoir émis cet énoncé est un passager qui est autorisé à effectuer l'opération de conduite et le contenu de l'énoncé émis par le premier passager se rapportent à l'opération de conduite, et
l'émission d'un deuxième signal de contrôle indiquant l'exécution de l'opération du véhicule différente de l'opération de conduite du véhicule en fonction d'un contenu d'un énoncé émis par un deuxième passager, dans un cas où le deuxième passager qui est reconnu avoir émis l'énoncé est un passager qui n'est pas autorisé à effectuer l'opération de conduite du véhicule et est un passager qui est autorisé à effectuer l'opération du véhicule différente de l'opération de conduite du véhicule, et le contenu de l'énoncé émis par le deuxième passager se rapporte à l'opération du véhicule différente de l'opération de conduite du véhicule.

7. Procédé de traitement d'informations comprenant :
dans un cas où un énoncé émis par l'un d'une pluralité de passagers qui sont à bord d'un véhicule est acquis, la reconnaissance du passager qui a émis l'énoncé ; et
le contrôle de l'opération de conduite du véhicule indiquée par l'énoncé du passager, sur la base d'un résultat de reconnaissance du passager qui a émis l'énoncé et sur la définition d'informations qui sont des informations qui ont été définies à l'avance par rapport à chacun de la pluralité de passagers, qui sont des informations indiquant si le passager est un passager autorisé à effectuer la conduite du véhicule et qui inclut des informations indiquant si le passager est un passager autorisé à effectuer l'opération du véhicule différente de la conduite,
l'émission d'un premier signal de contrôle indiquant l'exécution d'une opération de conduite du véhicule en fonction d'un contenu d'un énoncé émis par un premier passager, dans le cas où le premier passager qui est reconnu avoir émis cet énoncé est un passager qui est autorisé à effectuer l'opération de conduite et le contenu de l'énoncé émis par le premier passager se rapportent à la opération de conduite, et
l'émission d'un deuxième signal de contrôle indiquant l'exécution de l'opération du véhicule différente de l'opération de conduite du véhicule en fonction d'un contenu d'un énoncé émis par un deuxième passager, dans un cas où le deuxième passager qui est reconnu pour avoir émis l'énoncé est un passager qui n'est pas autorisé à effectuer l'opération de conduite du véhicule et est un passager qui est autorisé à effectuer l'opération de véhicule différente de l'opération de conduite du véhicule, et le contenu de l'énoncé émis par le deuxième passager se rapporte à l'opération du véhicule différente de l'opération de conduite du véhicule.
